# EUROPEAN PATENT APPLICATION

(11) **EP 4 321 423 A1**
(43) Date of publication of application: **14.02.2024**
(21) Application number: 22784910.6
(22) Date of filing: 05.04.2022
(51) Int. Cl.: B63B 35/44, B63B 1/10, B63B 39/00, F03D 13/25

(54) **FLOATING PLATFORM AND FLOATING OFFSHORE WIND POWER EQUIPMENT COMPRISING SAME**

(30) Priority: 06.04.2021 KR 20210044723
(71) Applicant: POSCO Co., Ltd, Pohang-si, Gyeongsangbuk-do 37859 (KR)
(72) Inventor: SON, Sanghun, Seoul 05514 (KR); NOH, Myunghyun, Incheon 21558 (KR); PARK, Kyu-sik, Incheon 21986 (KR); KIM, Eungsoo, Incheon 22002 (KR)
(74) Representative: Zech, Stefan Markus
(86) International application number: PCT/KR2022/004855
(87) International publication number: WO 2022/216001

(57) **Abstract**

Disclosed herein are a floating platform and a floating offshore wind power generator with the same. The floating offshore wind power generator according to an embodiment includes a power generator disposed on an upper portion and configured to perform a wind power generation action, and a floating platform configured to support the power generator while floating on the sea. The floating platform includes a plurality of floats provided in the form of a hollow cylindrical shape and erected in a vertical direction, a connecting beam connecting and binding between the plurality of the floats, and a strake having a spiral shape and provided on an outer circumference of a lower region of each of floats while avoiding a connecting position of the connecting beam.

## Description

### [Technical Field]

The present disclosure relates to a floating platform installed in a floating manner on the sea and a floating offshore wind power generator having the same.

### [Background Art]

In general, wind power generation converts wind energy into mechanical energy to produce electricity and has been attracting attention as a clean energy source for reducing greenhouse gas emissions.

Wind power generators have been installed mainly on land, but offshore installations are gradually increasing to solve noise complaints or site acquisition problems due to the increase in demand.

One type of wind power generators installed offshore is a floating type, which generates electricity while floating in the water.

The floating type wind power generators are less restricted by water depth, so they may easily be installed in deeper waters where strong winds can increase the efficiency of power generation.

A floating offshore wind power generator includes a power generator located at the top and a floating platform at the bottom to support the power generator while floating on the sea.

Meanwhile, the floating platform floating on the sea generates vortexes by ocean currents, and these vortices exert pressure on the platform, causing the platform to vibrate.

As a result, in the floating offshore wind power generator, the floating platform is easily damaged by vibration or an entire device is shaken by the movement of the platform, thereby impairing the safety of the shock-sensitive power generator.

Such problems may occur not only in floating offshore wind power generators, but also in a variety of other facilities that are installed in a floating manner through a floating platform on the sea.

### [Disclosure]

### [Technical Problem]

Therefore, it is an aspect of the present disclosure to provide a floating platform capable of improving its own durability while ensuring the stability of the facilities located on an upper portion thereof.

Further, it is an aspect of the present disclosure to provide a floating offshore wind power generator capable of improving the durability of a floating platform supporting a power generator while ensuring the safety of the power generator located on an upper portion thereof.

### [Technical Solution]

In accordance with one aspect of the disclosure, a floating offshore wind power generator includes a power generator disposed on an upper portion and configured to perform a wind power generation action, and a floating platform configured to support the power generator while floating on the sea. The floating platform includes a plurality of floats provided in the form of a hollow cylindrical shape and erected in a vertical direction, a connecting beam connecting and binding between the plurality of the floats, and a strake having a spiral shape and provided on an outer circumference of a lower region of each of floats by avoiding a connecting position of the connecting beam.

The strake may extend discontinuously to form a coil shape axially along the outer circumference of the float.

The floating offshore wind power generator may further include a reinforcing member configured to reinforce a connecting portion between the connecting beam and the float, and the reinforcing member may include a horizontal reinforcing member having a ring-shaped and supporting the outer circumference of the float in a horizontal state.

In accordance with another aspect of the disclosure, a floating platform includes a plurality of floats provided in the form of a hollow cylindrical shape and erected in a vertical direction, a connecting beam connecting and binding between the plurality of the floats, and a strake having a spiral shape and provided on an outer circumference of a lower region of the individual floats while avoiding a connecting position of the connecting beam.

### [Advantageous Effects]

According to various embodiments of the disclosure, the floating offshore wind power generator may increase the rigidity of the floating platform, and reduce the vibration of the floating platform caused by the vortexes, thereby improving the durability of the floating platform while ensuring the safety of the power generator on the upper portion.

Further, according to various embodiments of the disclosure, the floating platform may allow its own rigidity to be increased and the vibration caused by the vortexes to be reduced, thereby improving its own durability while ensuring the safety of the power generator on the upper portion.

### [Description of Drawings]

FIG. 1 is a perspective view illustrating a floating offshore wind power generator according to an embodiment of the disclosure.
FIG. 2 is a front view illustrating a state in which the floating offshore wind power generator shown in FIG. 1 is floating on the sea.
FIG. 3 is an enlarged perspective view illustrating a floating platform according to an embodiment of the disclosure.
FIG. 4 is a perspective view illustrating a modified example of a floating body of the floating platform according to an embodiment of the disclosure.
FIG. 5 is a side view illustrating a main portion showing another modified example of a floating body of a floating platform according to an embodiment of the disclosure, and a portion thereof is cross-sectionally processed.
FIG. 6 is a side view illustrating a main portion showing another modified example of a floating body of a floating platform according to an embodiment of the disclosure, and a portion thereof is cross-sectionally processed.

### [Modes of the Invention]

Hereinafter, the embodiments of the disclosure will be described in detail with reference to accompanying drawings. It should be understood that the terms used in the specification and the appended claims should not be construed as limited to general and dictionary meanings, but interpreted based on the meanings and concepts corresponding to technical aspects of the disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the spirit and scope of the disclosure. To clearly illustrate the disclosure, parts not essential to the description have been omitted from the drawings, and in the drawings, the widths, lengths, thicknesses, or the like of components may be exaggerated for convenience. Throughout the specification, like reference numerals refer to like components.

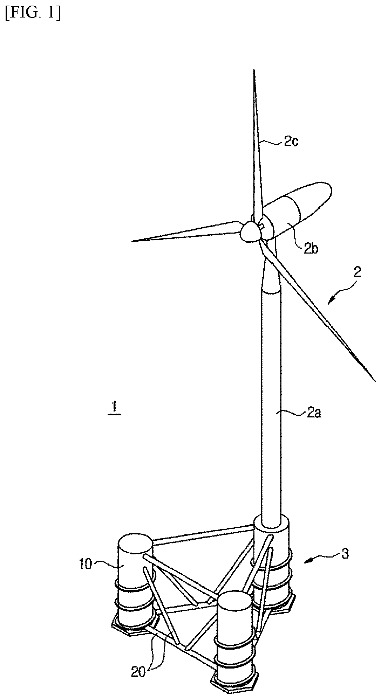

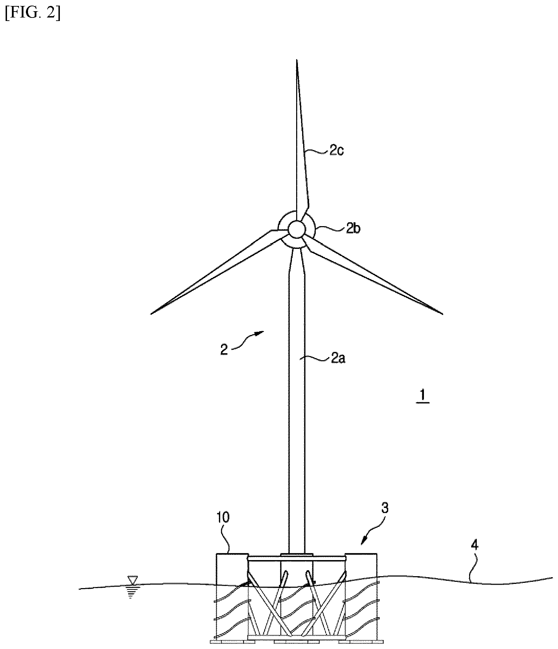

As shown in FIGS. 1 to 3, a floating offshore wind power generator 1 according to an embodiment of the disclosure may include a power generator 2 located on an upper portion and provided to perform a wind power generation action, and a floating platform 3 provided to support the power generator while floating on the sea.

The power generator 2 may include a tower 2a, a nacelle 2b installed on an upper portion of the tower 2a, and a rotor 2c connected to a rotation shaft of the nacelle 2b. The nacelle 2b has a built-in generator as a component that converts wind power into mechanical rotational energy. Accordingly, the power generator 2 may perform a power generation action when the generator is operated by the rotor 2c rotated by the wind.

The floating platform 3 may include a plurality of floats 10 and a connecting beam 20 provided to connect and bind the plurality of floats 10 to each other.

Each float 10 is provided in a hollow cylindrical shape and erected in a vertical direction, and the plurality of floats 10 may be spaced apart from each other.

The connecting beam 20 may have a pipe shape and be provided in a plurality. The connecting beam 20 may include a plurality of horizontal connecting beams 21 connected to the float 10 in a horizontal direction and a plurality of inclined connecting beams 22 connected to the float 10 in an inclined manner.

Each of the horizontal connecting beams 21 may include an upper horizontal connecting beam 21a connecting between an upper side surfaces of the floats 10 and a lower horizontal connecting beam 21b connecting between a lower side surfaces of the floats 10. Each of the inclined connecting beams 22 may be arranged to connect between a side of the float 10 at a lower portion of a position where the upper horizontal connecting beam 21a is connected and the lower horizontal connecting beam 21b.

The plurality of floats 10 move integrally in a state of mutual bonding by the connecting beams 20, and accordingly, the power generator 2 is stably supported by the floating platform 3 acting integrally.

The plurality of floats 10 are arranged to be radially spaced apart from each other, and the power generator 2 may be positioned above any one of the floats 10.

In contrast to what is shown in the drawings, the power generator 2 may be located corresponding to the center of the floating platform 3, and to this end, the center of the floating platform 3 may be further provided with connecting beams and/or floats for installing the power generator 2. In other words, an arrangement of the floats 10 and the position of the power generator 2 based on the arrangement may be modified in different forms.

On the other hand, to reduce the vibration of the floating platform 3, a strake 30 may be provided on an outer circumference of the float 10.

The strake 30 may protrude laterally from an outer surface of the float 10 and be arranged in the form of a spiral band shape extending axially along the outer circumference of the float 10 to form a coil shape. The strake 30 may be coupled to the outer surface of the float 10 by welding.

The strake 30 formed spirally along the outer circumference of the float 10 may act as resistance to a vertical flow of the float 10, thereby reducing vortex induced vibration (VIV) generated in the float 30.

Furthermore, the strake 30 may act as resistance to a flow of the ocean current to allow the ocean current passing through the float 10 to be vibrated, and the turbulence generated around the float 10 by the vibration may suppress a pressure difference between the front and rear of the float 10 from increasing due to vortices formed behind the float 10 while passing through the float 10. Accordingly, the strake 30 may, for example, reduce the vibration applied to the float 10 by reducing an amount of drag applied to the float 10.

Such a vibration-reduced structure of the float 10 may allow the floating platform 3 to float in a stable position preventing flow, so that the overall flow of an apparatus including the power generator 2 may be suppressed.

As a result, the floating offshore wind power generator 1 may prevent damage caused by vibration of the floating platform 3, so that the durability of the floating platform 3 may be improved.

In addition, the flow-controlled power generator 2 may suppress the failure of shock-sensitive parts, such as motors and electrical components, thereby facilitating maintenance and ensuring safety in use, such as improving power generation efficiency.

The strake 30 may be implemented in a continuous spiral shape as well as a discontinuous spiral shape.

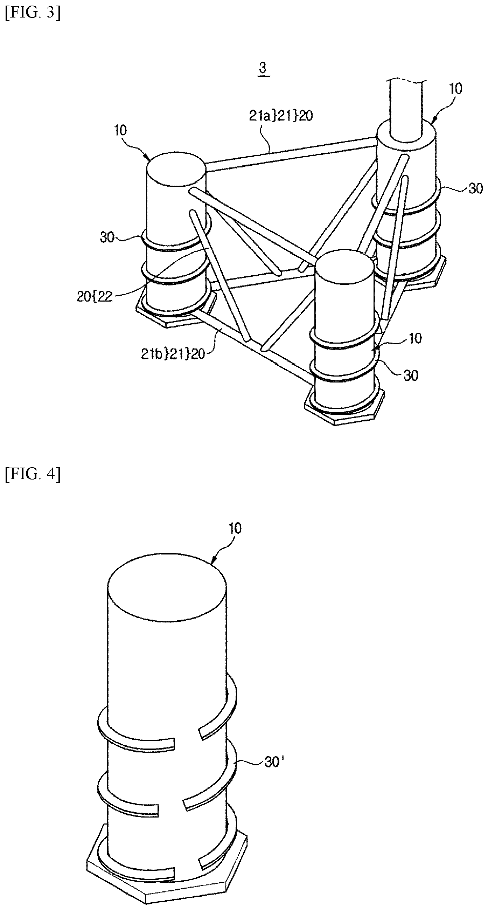

As shown in FIG. 4, a strake 30' provided in the form of a discontinuous spiral may be easily partially replaced or repaired during use of the wind power generator 1, which may be advantageous in terms of maintenance.

The float 10 may float in a semi-submersible manner in which an upper portion is positioned above a water surface 4 and a lower portion is submerged in the water surface 4. The strake 30 may be installed around a lower region of the float 10 that is submerged in the water surface 4.

The strake 30 may be provided by avoiding a position where the connecting beams 20 are connected to the lower region of each of the floats 10 so as to suppress vibration reduction action of the float 10 by the strake 30 from being interfered with by the connecting beams 20 connecting the floats 10.

To this end, the strake 30 may be provided around the lower region of the float 10 corresponding to a space between a position where the inclined connecting beam 22 is connected and a position where the lower horizontal connecting beam 21b is connected.

Furthermore, the float 10 may include a reinforcing member 40 for reinforcing the strength of a portion to which the connecting beam 20 is connected.

The reinforcing member 40 may reinforce a connection between the connecting beam 20 and the float 10, so that a load concentrated between the connecting beam 20 and the float 10 may be evenly distributed throughout the floating platform 3.

Accordingly, the floating platform 3 including the reinforcing member 40 may have more advantageous in terms of durability, such as separation between the float 10 and the connecting beam 20 is inhibited by the compressive force exerted on the float 10, and the damage to the float 10 by the connecting beam 20 is reduced.

The reinforcing member 40 may include a horizontal reinforcing member 41 having a ring-shaped and supporting at least one of the outer circumference and the inner circumference of the float 10 in a horizontal state.

The horizontal reinforcing member 41 is to maximize load distribution effect to the outer or inner circumference of the float 10, and the horizontal reinforcing member 41 may be welded to the float 10 such that the inner circumference of the horizontal reinforcing member is supported on the outer circumference of the float 10 at a location where the connecting beams 20 are connected, or the outer circumference of the horizontal reinforcing member is supported on the inner circumference of the float 10 at a location where the connecting beams 20 are connected.

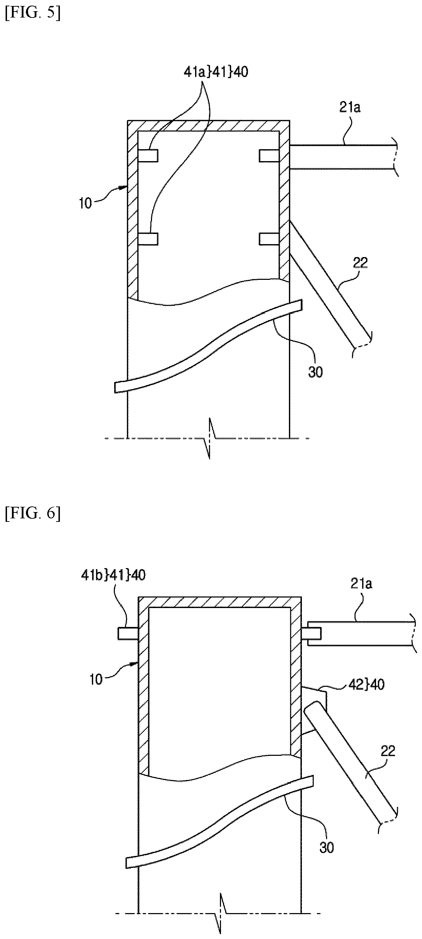

As shown in FIG. 5, the horizontal reinforcing member 41 may include an internal horizontal reinforcing member 41a embedded in the float 10 so as to be supported on the inner circumference of the float 10.

A plurality of internal horizontal reinforcing members 41a may be provided, and the individual internal horizontal reinforcing members 41a may be disposed on the inner circumference of the float 10 corresponding to the heights of the upper horizontal connecting beam 21a, the inclined connecting beam 22, and the lower horizontal connecting beam 21b.

As shown in FIG. 6, the horizontal reinforcing member 41 may also include an external horizontal reinforcing member 41b provided to be supported on the outer circumference of the float 10.

The external horizontal reinforcing member 41b exposed to the outside of the float 10 may be easily repaired or replaced due to damage during use of the wind power generator 1, which may be advantageous in terms of maintenance.

The connecting beam 20 may be coupled to the external horizontal reinforcing member 41b in a state of being spaced apart from the outer surface of the float 10 so as to be indirectly connected to the float 10. Therefore, the load applied to the float 10 by the connecting beam 20 may be distributed to the outer circumference of the float 10 through the external horizontal reinforcing member 41b.

The external horizontal reinforcing member 41b may include a pair disposed on the outer circumference of the float 10 corresponding to the height of the upper horizontal connecting beam 21a and the lower horizontal connecting beam 21b, respectively. The reinforcing member 40 may further include a vertical reinforcing member 42 protruding perpendicularly to the outer surface corresponding to a connection location of the inclined connecting beam 22 to allow the inclined connecting beam 22 to be coupled.

The vertical reinforcing member 42 formed in the vertical direction may be relatively less deformable in supporting the inclined connecting beam 22 when compared to the external horizontal reinforcing member 41b in its formation orientation.

The inclined connecting beam 22 may be coupled to the vertical reinforcing member 42 while being spaced apart from the outer surface of the float 10 so as to be indirectly connected to the float 10.

For reference, the structure and advantage of the floating platform 3 described above may be adapted in an almost similar manner to various other facilities that are installed floating on the sea by the floating platform 3 in addition to the wind power generator 1.

## Claims

1. A floating offshore wind power generator, comprising:
a power generator disposed on an upper portion and configured to perform a wind power generation action; and
a floating platform configured to support the power generator while floating on the sea;
wherein the floating platform includes:
a plurality of floats provided in the form of a hollow cylindrical shape and erected in a vertical direction;
a connecting beam connecting and binding between the plurality of the floats; and
a strake having a spiral shape and provided on an outer circumference of a lower region of each of floats by avoiding a connecting position of the connecting beam.

2. The floating offshore wind power generator of claim 1, wherein the strake extends discontinuously to form a coil shape axially along the outer circumference of the float.

3. The floating offshore wind power generator of claim 1, further comprising a reinforcing member configured to reinforce a connecting portion between the connecting beam and the float, and
wherein the reinforcing member includes a horizontal reinforcing member having a ring-shaped and supporting the outer circumference of the float in a horizontal state.

4. A floating platform, comprising:
a plurality of floats provided in the form of a hollow cylindrical shape and erected in a vertical direction;
a connecting beam connecting and binding between the plurality of the floats; and
a strake having a spiral shape and provided on an outer circumference of a lower region of the individual floats by avoiding a connecting position of the connecting beam.
